# EUROPEAN PATENT APPLICATION

(11) **EP 1 118 266 A1**
(43) Date of publication of application: **25.07.2001**
(21) Application number: 00830036.0
(22) Date of filing: 21.01.2000
(51) Int. Cl.: A01K 1/015, B01J 20/30, B01J 20/12

(54) **A granular absorbent material for pet litters**

(71) Applicant: Societa Sarda Di Bentonite S.p.A., 09096 Santa Giusta (Oristano) (IT)
(72) Inventor: Biagi, Sandro, 09016 Iglesias (IT)
(74) Representative: Bardini, Marco Luigi

(57) **Abstract**

A granular absorbent material for pet litters obtained by mixing intimately substantially anhydrous calcium sulfate with a smectite clay which yields a part of its interlayered water to the calcium sulfate, thus partially hydrating the calcium sulfate with formation of agglomerates which are dried, crushed and screened.

## Description

The present invention relates to a granular absorbent material for pet litters. The invention also relates to a method for the production of the granular absorbent material for litters.

As is known, a widespread type of litter material takes advantage of the high absorbing properties exhibited by certain natural minerals, by virtue of which pet excrements can be easily collected and hygienically disposed of. This kind of minerals includes various families of clay containing attapulgite or paligorskite, sepiolite and all the types of smectite (montmorillonite, beidellite, nontronite, hectorite, saponite) and the like, or containing illite, kaolinite and the like, though with lower effectiveness for this purpose, sometime mixed with inert minerals, but with a large specific surface (such as vermiculite, expanded perlite, tuff, limestone and the like). These minerals are capable of retain aqueous liquids, oily and fatty substances, as well as products with a strong smell, in particular of the ammoniacal type, or, anyway, produced by nitrogenous organic products.

In the practice, when used as a pet litter, especially for cats, these minerals are dried either alone or as a mixture, reduced to a proper granule size and then put on the market under various names and package types, ranging from 2 to 20 kg, even if all can be referred to only two categories: a first category including lower apparent specific weight materials, which absorbs liquids in an uniform way and, once they are saturated, are disposed as a whole, and a second category comprising products, which, once in contact with the liquid part of the pet excrements form agglomerates of substantially spherical shape that can be removed from the box containing the remaining part of a standard batch (approx. 2 kg), which, in this way, is always maintained flowable and substantially clean.

The action mechanism justifying the use of these materials as pet litters can be led back to the following:
a) cationic exchange mechanisms for some of these clays which allow the aminic and ammonia groups and the like, as main responsible for the bad smell of the pet excrements, to be retained at the surface thereof;
b) ability of absorbing liquids on their solid surface in a more or less bonded way, (especially aqueous liquids, but also fatty substances) in a large amount with respect to their own weight and/or volume;
c) ability of retaining smell-responsible molecules, confining them into small channels, which the single particles are formed of, capable of acting as a molecular sieve, or also of retaining them at their surface due to electrochemical or adsorption phenomena and the like.
From a practical point of view, besides the above mentioned primary functions, the commercial products must exhibit certain organoleptic characteristics, the white or light products being preferred. These features are obtained by a proper selection of the raw materials and a suitable treatment of the product. However, as far as the dust formation due to the various handling operations and movements between the production and the user site are concerned, due to the brittleness of the clayey product there is the tendency to the granule crushing with the formation of a finer particulate not present at the beginning, responsible of various commercial drawbacks.
On the other side, till now it has been found to be a problem to combine in an optimal way the feature of a good liquid adsorption and smell control with the feature of a sufficiently light colour and a limited tendency of the produced granules to the dust formation. For these reasons and considering the high volumes of these products which are currently sold, various researches are carried on aiming at obtaining better quality products.
It is also known that a considerable production excess of calcium sulfate presently exists, with severe disposal problems. As is known, calcium sulfate is the by-product of many production processes, as well as liquid and gaseous effluent treatment processes. A typical case is the treatment of acid industrial waste waters with known processes providing for their neutralization by addition of calcium hydroxide or magnesium hydroxide and precipitation of the relevant salt.
Anhydrous calcium sulfate, both the natural one (anhydrite) and that obtained by precipitation and drying preferably at a temperature lower than 250°C, has a significant capacity of retaining water in a stable way, as crystallization water, forming characteristic hydrates which harden even quickly giving rise to setting phenomena well known in the field of constructions, stucco works and the like. However, the use of gypsum for these applications is wholly insufficient to consume the larger and larger gypsum amounts produced from the above mentioned sources and there is a strong need to find alternative uses for this material which is now almost exclusively available as by-product of industrial processes, with the aim of reducing the volumes of gypsum to be disposed of.
It was already suggested (see for example US patent No. 4163674) the use of granular gypsum for the absorption of liquids such as oils, fats, water or as a support for pesticides, fungicides and herbicides in the agricultural and horticultural field, as a ground conditioning agent and as litter absorbing material. The granular gypsum-based products are by far more cheaper than the granular natural clays which are currently used for the same application. However, their use in particular for pet litters was not proven satisfactory, both because of the formation of muddy mixtures by contact with liquids before the hardening, and because of the lack of bad odours absorbing properties.
In other cases the use of gypsum as a binder in the preparation of pet litter materials has been proposed. For example, European patent application No. 678054 in the name of SUD CHEMIE AG discloses a litter material based on cellulose fibre, recovered from the waste water resulting from the paper manufacturing industry, with small amounts of smectite and anhydrous or semihydrated gypsum as a binder. PCT application No. WO 93/19016 discloses the use of semihydrated calcium sulfate to produce a granular absorbing material with a low apparent density (lower than 0,5 g/cc) which can be used, inter alia, as a litter. Small amounts of sodium bentonite (in the range of 1-2%) can be added essentially acting as a dispersant. In order to compensate for the granule brittleness due to the high water content, a small amount of aluminium sulfate is added.
European patent No. 303760 discloses the use of semihydrated calcium sulfate in combination with perlite to produce a granular absorbing material for pet litters having a low apparent density (lower than 0,6 g/cc). Even in this case the low density of the material is related to a considerable brittleness which only partly is balanced by the binding action of the calcium sulfate. In summary, though attracting from the technical and economical standpoint, the use of calcium sulfate for the production of granular absorbing material for pet litters did not give, up to now, satisfactory results or at least capable of exhibiting all the features consumers expect from this type of product, that is high absorption capacity with the best control of bad odours and with a colour as white as possible accompanied by a low tendency to the production of dust.

The object of the present invention is to provide a granular, absorbing material with good clumping properties particularly for pet litters, exhibiting an high white index, good mechanical strength and low cost.

Another object of the present invention is to provide a process for the production of a granular, absorbing material capable of meeting the above mentioned need, which is easy and low-cost to exploit.

The idea which the present invention is based on consists in using, in combination with a smectite clay, anhydrous or substantially anhydrous calcium sulfate and to take advantage of the interlayered water of this type of clay (generally ranging from 8 to 12% by weight) to at least partly transform the calcium sulfate from the anhydrous state to the hemidryhate one. The semihydration reaction results in the agglomeration of the mixture and the formation of granules resisting to impact crushing and with a high white index. These granules still have an high absorbing power due to both the clay and the semydrated or still anhydrous calcium sulfate which can hydrate completely to dihydrate in the presence of water.

The granule size of the starting materials and the weight ratio of the components are particularly important parameters to obtain the effects of the invention. It is clear that the ability of the calcium sulfate to react with the interlayered water of the clay is as higher as more intimate is the contact among the granules of the components. Optimum conditions are obtained by means of a good mixing and controlling the granule size. Preferred granule size is less than 150µ for the calcium sulfate and more preferably 50-100µ and less than 40 mm for the clay and more preferably less than 30mm. As far as the weight ratio between clay and calcium sulfate, considering that the average water content of the clay is 10% by weight on a dry basis, the theoretical dry basis composition allowing the complete hydration of the anhydrous calcium sulfate to semihydrate is : calcium sulfate 62,1%, clay 37,9%. In the practice many factors affect the selection of the optimal composition. More precisely, the calcium sulfate is never completely anhydrous, the water content in the clay may vary even considerably with respect to the average value, the granule size and the degree of mixing affect the possibility of using the water present in the clay. Considering the above variables, as well as the fact that to attain a sufficient resistance and granule clumping it is not necessary to reach the complete semihydration of the calcium sulfate, the dry basis percentage of calcium sulfate and clay to be mixed in order to obtain the granular, absorbing material according to the invention is the following:

| | |
|---|---|
| substantially anhydrous calcium sulfate | 50-80% |
| smectite clay | 20-50% |

The person skilled in the art will be able to find the best composition in a obvious way on the basis of the features of the product to be obtained and the analysis of the available starting materials.

Advantageously calcium or sodium-calcium montmorillonite, generally known as bentonite, can be used as smectite clay. The material according to the present invention has a relatively high density, in the range of 0,8-1,0 g/cc.

The process of forming the granular material can comprise a step of extruding the gypsum/bentonite mixture, or a step of pellettizing with addition of nebulized water to promote mixture, agglomeration. Even when the process comprises an extrusion step, it is preferred to wet the mixture with nebulized water to keep it flowable and make easier the passage through the extruder. The amount of water which is added is anyway not greater than 3% by weight of the mixture in both cases and is removed by means of moderate drying of the material coming out from the extruder or the pellettizer, before submitting it to crushing and screening.

The following, not limiting examples are given to show how the invention can be put into practice.

### EXAMPLE 1

70 kg of powdered anhydrous calcium sulfate are intimately mixed with 30 kg of natural smectite. The calcium sulfate is in particular of the type known as "anhydrite" obtained as a residue of the treatment of industrial waste waters from a plant for producing hydrofluoric acid from fluorite or cryolite and after that the residue has been dried at 250°C, until it is transformed into an anhydrous product for about 95%. The granule size is lower than 75 µ. In particular, the smectite is a calcium montmorillonite of white colour (white index ≥ 85%) obtained from a raw material of Turkish origin and reduced to a mean granule size of about 20 mm with a loss of water at 110°C comprised between 20 and 40%. The mixture is first wet with nebulized water and then passed through a clay extruder or similar apparatus, for example an horizontal double extruder of the type "BEDESCHI" or "MORANDO", or suitably modified "RICHTER" or "BONGIOANNI" type vertical apparatuses. If an horizontal extruder is used, the hole diameter is 15-18 mm, while if a vertical extruder is used the hole diameter is 10-12 mm. The power is 200HP in both cases.

From the analysis conducted on the extruded product it resulted that the percentage of semihydrate calcium sulfate with respect to the total calcium sulfate increased from 5 to 12%. A remarkable swelling of the clay lattice was evidenced by means of treatment with ethylene glycol, thus confirming that mixing the clay with calcium sulfate does not modify the mineralogical, crystalline and chemical characteristics of the starting clay.

The product is then dried in a fluid bed dryer until the residual water content is about 7-8%. The extruder and dried product is then crushed by means of a hammer mill or crushing rolls. The crushed material is finally screened with a rotatory screen up to a granule size comprised between 1 and 6 mm, while the finer and the larger product are recirculated to the starting step and to the crusher respectively.

### EXAMPLE 2

Anhydrous calcium sulfate, as in Example 1, is intimately mixed with a commercial smectite, such as bentonite, previously dried and reduced into a powder with granule size of about 75 µ and a water residue at 110°C equal to 5-14%. This powder mixture is pellettized with nebulized water on a suitable drum (for example, diameter 1.5 m, rotation speed 18 rpm, inclination 45°). The pellets produced are dried in a fluid bed drier, crushed and screened as in the previous example.

### EXAMPLE 3

The powders of anhydrous calcium sulfate and smectite as described in the Example 2 are processed in a dry tablet press to produce compact granules of the desired size which are then screened.

The average process yield is about 70-80%. The chemical and mineralogical composition and the other technological characteristics of the final product are listed herebelow:
- average granule size 0.5 - 6.0 mm
- water loss at 150°C 10.0% max
- apparent specific weight 0.9 - 1.0 g/cc
- pH 7.0 - 9.0
- water absorption 110.0% min

The clumping ability of the product has been tested in the following way. Clumps are formed by pouring 20cc of water in a basin containing a layer of 7 cm of litter formed with the material having the composition according to the invention.

In these conditions clumps are formed of 80-100 g resistant to the fall from an height of 20 cm.

Variations and/or modifications can be brought to the granular absorbing material and the production method thereof according to the present invention, without departing from the scope of the invention as defined in the attached claims.

## Claims

1. Method for the production of a granular absorbing material, particularly for pet litters, characterized in that it comprises the following steps:
intimately mixing substantially anhydrous calcium sulfate with a smectite clay to form agglomerates, said clay containing interlayered water which reacts with said calcium sulfate to produce a partial hydration thereof;
drying these agglomerates up to a residual water content not greater than 10% by weight;
crushing the dried material;
screening the crushed material up to a granule size from 0.5 to 6 mm.

2. The method according to claim 1, wherein said calcium sulfate and said smectite clay are brought into contact in the following per cent proportions on a dry basis:
| | |
|---|---|
| substantially anhydrous calcium sulfate | 50-80% |
| smectite clay | 20-50%. |

3. The method according to claims 1 or 2, wherein the formation of the agglomerates from said mixture of substantially anhydrous calcium sulfate and smectite clay is obtained by extrusion.

4. The method according to claim 3, wherein said mixture to submit to extrusion is treated with nebulized water.

5. The method according to claims 1 or 2, wherein the formation of the agglomerates from said mixture of substantially anhydrous calcium sulfate and smectite clay is obtained by pelletization with nebulized water.

6. The method according to claims 1 or 2, wherein the formation of the agglomerates from said mixture of substantially anhydrous calcium sulfate and smectite clay is obtained by tablet pressing .

7. The method according to claim 4, wherein the addition of nebulized water is not greater than 3% of the weight of the mixture.

8. Granular absorbing material for pet litters, characterized in that it comprises a smectite clay agglomerated with calcium sulfate made at least partially semihydrated by reaction with the interlayered water of said smectite clay.

9. Granular absorbing material according to claim 8, characterized by the following composition on a dry basis:
| | |
|---|---|
| substantially anhydrous calcium sulfate | 50-80% |
| smectite clay | 20-50% |

10. Granular absorbing material for pet litter characterized in that it comprises smectite clay and at least partially semihydrated calcium sulfate and in that it is produced according to the method claimed in anyone of the claims 1 to 7.
